# EUROPEAN PATENT SPECIFICATION

(11) **EP 2 769 214 B1**
(45) Date of publication and mention of the grant of the patent: **22.05.2019**
(21) Application number: 11874315.2
(22) Date of filing: 18.10.2011
(51) Int. Cl.: G01N 21/65, G01N 33/483, G01N 21/25, G01J 3/44

(54) **MOLECULAR SENSING DEVICE**
MOLEKULARE ERFASSUNGSVORRICHTUNG
DISPOSITIF DE DÉTECTION MOLÉCULAIRE

(43) Date of publication of application: 27.08.2014
(73) Proprietor: Hewlett-Packard Development Company, L.P., Spring TX 77389 (US)
(72) Inventor: LI, Zhiyong, Palo Alto, CA 94304-1100 (US); KIM, Ansoon, Palo Alto, CA 94304-1100 (US)
(74) Representative: HGF Limited
(86) International application number: PCT/US2011/056699
(87) International publication number: WO 2013/058739

(56) References cited:
- WO-A1-2011/016888
- WO-A1-2011/093871
- US-A1- 2005 133 697
- US-A1- 2006 055 921
- US-A1- 2006 056 463
- US-A1- 2006 077 382
- US-A1- 2007 254 377
- US-A1- 2009 066 946
- US-A1- 2009 279 085
- US-A1- 2010 321 684
- US-B1- 6 406 777
- US-B1- 7 022 288
- XIU-MEI LIN ET AL: "Surface-enhanced Raman spectroscopy: substrate-related issues", ANALYTICAL AND BIOANALYTICAL CHEMISTRY, SPRINGER, BERLIN, DE, vol. 394, no. 7, 19 April 2009 (2009-04-19), pages 1729-1745, XP019736554, ISSN: 1618-2650, DOI: 10.1007/S00216-009-2761-5
- WEI WU ET AL: "<title>Rational engineering of highly sensitive SERS substrate based on nanocone structures</title>", PROCEEDINGS OF SPIE, vol. 7673, 23 April 2010 (2010-04-23), pages 76730O-76730O-6, XP055172245, ISSN: 0277-786X, DOI: 10.1117/12.849959

## Description

### BACKGROUND

The present disclosure relates generally to molecular sensing devices.

Assays and other sensing systems have been used in the chemical, biochemical, medical and environmental fields to detect the presence and/or concentration of one or more chemical substances. Some sensing techniques utilize color or contrast for substance detection and measurement, for example, those techniques based upon reflectance, transmittance, fluorescence, or phosphorescence. Other sensing techniques, such as Raman spectroscopy or surface enhanced Raman spectroscopy (SERS), study vibrational, rotational, and other low-frequency modes in a system. In particular, Raman spectroscopy is used to study the transitions between molecular energy states when photons interact with molecules, which results in the energy of the scattered photons being shifted. The Raman scattering of a molecule can be seen as two processes. The molecule, which is at a certain energy state, is first excited into another (either virtual or real) energy state by the incident photons, which is ordinarily in the optical frequency domain. The excited molecule then radiates as a dipole source under the influence of the environment in which it sits at a frequency that may be relatively low (i.e., Stokes scattering), or that may be relatively high (i.e., anti-Stokes scattering) compared to the excitation photons. The Raman spectrum of different molecules or matters has characteristic peaks that can be used to identify the species.

WO 2011 016888 relates to methods and apparatus for transport at airborne molecules using an active cyclical/vapour/liquid exchange.

WO2011016888 discloses a device comprising a plurality of integrated arrays of microcells formed in a substrate each of which comprises an active surface used to facilitate detection and measurement of an analyte for example by a SERS-active surface/substrate confined therein. The active surface is for example comprised of nanostructures, such as metallic nanoparticles attached to the substrate which provide a nanostructured and metallized surface to which analytes adsorb. A liquid phase is provided within each microcell above the respective SERS nanostructures and serves as a barrier to substantially exclude or isolate contaminants, spoofing compounds and chemical noise.

WO 2011/093871 A1 discloses two separate embodiments of a surface enhanced Raman spectroscopy (SERS) sensing device. The sensing device comprises a support which includes a substrate having an insulating layer thereon. In the first embodiment the sensing device includes wells 29 in which cone-shaped three-dimensional structures are formed having nano-scale dimensions and which are positioned within respective wells. The tips of the cone-shaped base structures are for example recessed to define a particular detection volume for gases or liquids in the wells. In the second embodiment inner electrodes are formed by deposition of a metal layer, on the cone-shaped base structures and the sensing devices are used as an optical sensor in SERS whereby an electric field modulation due to the electrodes enhances the SERS intensity as molecular analytes form an increased concentration at the tip of the cone-shaped electrodes.

US 2010/0321684 A1 discloses a signal-amplification device for SERS including a non-SERS-active (NSA) substrate, a plurality of multi-tiered non-SERS-active nanowire (MNSANW) structures and a plurality of metallic SERS-active nanoparticles. The signal amplification device is positioned in an enclosure defining an analysis cell for detecting a molecule by SERS amplification.

### BRIEF DESCRIPTION OF THE DRAWINGS

Features and advantages of examples of the present disclosure will become apparent by reference to the following detailed description and drawings, in which like reference numerals correspond to similar, though perhaps not identical, components. For the sake of brevity, reference numerals or features having a previously described function may or may not be described in connection with other drawings in which they appear.
Figs. 1A and 1B are perspective views of two examples of a molecular sensing device;
Figs. 2A through 2F together are a schematic flow diagram depicting an example of a method for forming an example of a molecular sensing device;
Figs. 3A through 3C are top views of examples of molecular sensing devices (note the cover and signal amplifying structures are not shown) having different well configurations and different immersion fluid configurations;
Fig. 4 is a perspective view of another example of a molecular sensing device; and
Fig. 5 is a schematic illustration of an example of a surface enhanced Raman spectroscopy system including an example of a molecular sensing device.

### DETAILED DESCRIPTION

Examples of the molecular sensing device disclosed herein enable signal amplifying structure(s) to be shipped and/or stored without being exposed to the ambient environment. The molecular sensing device(s) disclosed herein include an immersion fluid which at least surrounds the signal amplifying structure(s) and a removable cover which seals the immersion fluid within the device. As used herein, an "immersion fluid" may be a liquid or an inert gas. The sealed in immersion fluid prevents the signal amplifying structure(s) from prematurely absorbing undesirable species from the ambient environment. In some instances, the sealed in immersion fluid also prevents the signal amplifying structure(s) from prematurely behaving in an undesirable manner. As an example, the immersion fluid may prevent finger-like SERS nano-structures from irreversibly moving in connection with, or in the direction of, one or more adjacent finger-like SERS nano-structures prior to performing a sensing analysis. The immersion fluid also provides stability of the signal amplifying structures while the device is on-the-shelf.

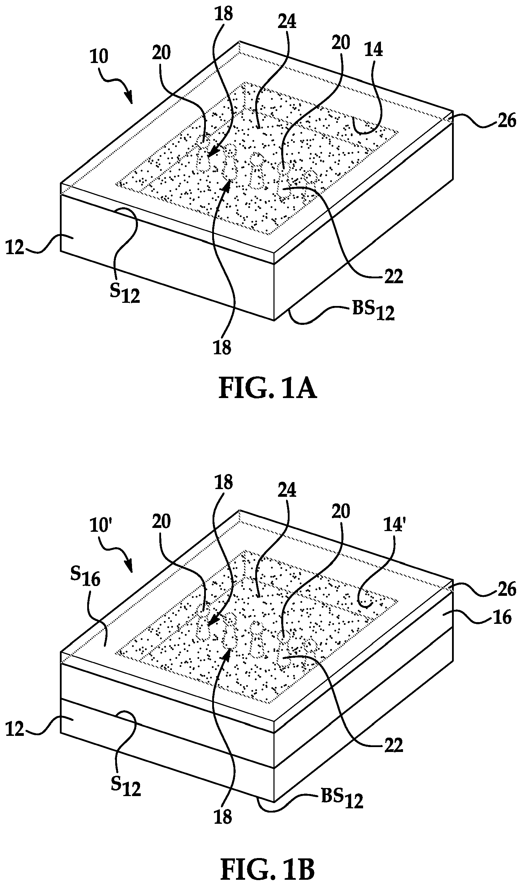

Referring now to Figs. 1A and 1B, two examples of the molecular sensing device 10 and 10' are depicted. Each of the molecular sensing devices 10, 10' includes a substrate 12. The molecular sensing device 10 shown in Fig. 1A includes a well 14 that is formed in a surface S₁₂ of the substrate 12, while the molecular sensing device 10' shown in Fig. 1B includes a well 14' that is formed in a surface S₁₆ of a material 16 that is positioned on the surface S₁₂ of the substrate 12. The wells 14, 14' of both examples will be discussed further hereinbelow.

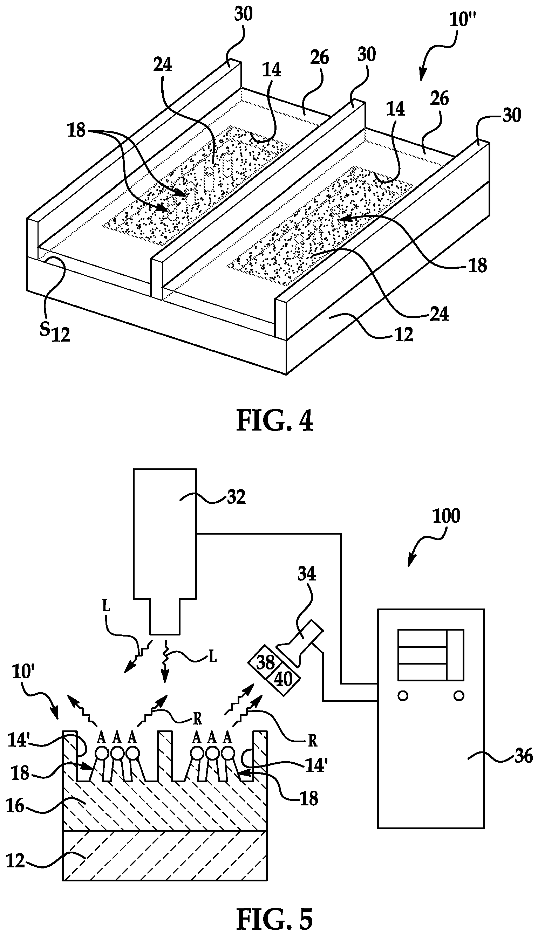

The substrate 12 in either the example shown in Fig. 1A or the example shown in Fig. 1B may be transparent or reflective, depending upon the position of the molecular sensing device 10, 10' when used in a sensing system (e.g., system 100 shown in Fig. 5). For example, if a sensor is positioned across from the surface S₁₂ or S₁₆ in which the well 14 or 14' is formed, the substrate 12 may be selected from reflective and/or non-reflective materials. Examples of suitable substrates in this example include germanium, silicon, or transparent substrates such as, e.g., glass, quartz, nitrides, alumina, sapphire, indium tin oxide, transparent polymers (e.g., polycarbonate, polyimide, acrylic, etc.), combinations thereof, and/or layers thereof. In an example, the transparent substrate includes a reflective mirror on a back surface BS₁₂ of the substrate 12. However, if a sensor is positioned across from the back surface BS₁₂ (i.e., the surface opposed to the surface S₁₂ or S₁₆ in which the well 14 or 14' is formed), the substrate 12 is selected from transparent materials so that any generated signal (e.g., scattered light) may be transmitted through the substrate 12 to the sensor. Examples of suitable transparent substrates include glass, quartz, nitrides, alumina, sapphire, indium tin oxide, transparent polymers (e.g., polycarbonate, polyimide, acrylic, etc.), or combinations or layers thereof. When the well 14 is formed in the substrate 12, it is to be understood that the substrate 12 may also be selected from a material that is capable of having the well 14 formed therein (e.g., via etching, imprinting, or another suitable technique).

The substrate 12 may have any desirable dimensions. In the example shown in Fig. 1A, the substrate 12 may be small enough to fabricate a single well 14 therein or may be large enough to fabricate a plurality of wells 14 therein. The thickness of the substrate 12 shown in Fig. 1A may be over 1 µm thick so that the well 14 formed therein has a depth that is about 1 µm. In the example shown in Fig. 1B, the substrate 12 may be small enough to fabricate a single well 14' in the material 16 positioned thereon, or may be large enough to fabricate a plurality of wells 14' in the material 16 positioned thereon. The substrate 12 shown in Fig. 1B may have any desirable thickness that provides support to the material 16 positioned thereon.

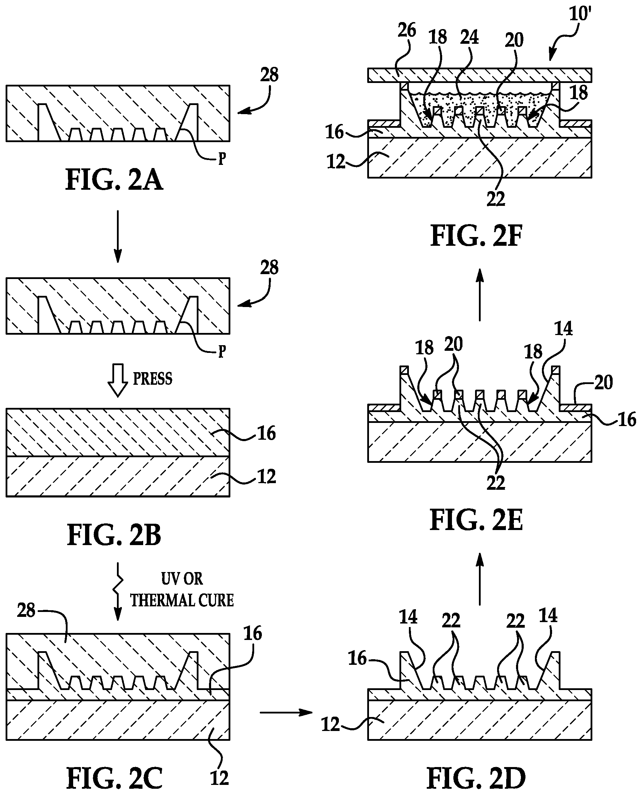

In the example shown in Fig. 1B, the material 16 is deposited (and in some instances cured) on the substrate 12 to at least a desirable thickness for the well 14' that is to be formed therein. For example, the thickness of the material 16 may be over 1 µm thick so that the well 14' formed therein has a depth that is about 1 µm. In an example, the material 16 may be any transparent material that is capable of having the well 14' formed therein (e.g., via etching, imprinting, or another suitable technique). Transparent materials 16 may be desirable when the substrate 12 is transparent. Examples of suitable transparent materials include glass, quartz, nitrides, alumina, silica, sapphire, transparent polymers, or combinations thereof. If the substrate 12 is not transparent, the material 16 may or may not be a transparent material. Examples of other suitable materials 16 include silicon, germanium, titanium, oxides of these materials (e.g., silicon oxide), or nitride. When the well 14' is formed in the material 16 via an imprinting technique (described further in reference to Figs. 2A-2F), the material 16 may be an ultraviolet or thermally curable resist. Some suitable resists are commercially available from Nanonex Corp., Monmouth Junction, NJ (e.g., NXR-2000 Series and NXR-1000 Series), and NanoLithoSolution, Inc.. San Marcos, CA (e.g., AR-UV-01).

As mentioned above, the molecular sensing devices 10 and 10' respectively include the well 14 or 14' formed in the surface S₁₂ of the substrate 12 or in the surface S₁₆ of the material 16. In the example shown in Fig. 1A, the well 14 is a cavity that extends from the surface S₁₂ of the substrate 12 into the substrate 12 to a desirable depth that is less than the thickness of the substrate 12. In the example shown in Fig. 1B, the well 14' is a cavity that extends from the surface S₁₆ of the material 16 into the material 16 to a desirable depth that is less than or equal to the thickness of the material 16. As such, in an example, the well 14 extends through the entire thickness of the material 16 so that the substrate surface S₁₂ is exposed, and in another example, the well 14' extends through less than the entire thickness of the material 16 so that the substrate surface S₁₂ is not exposed.

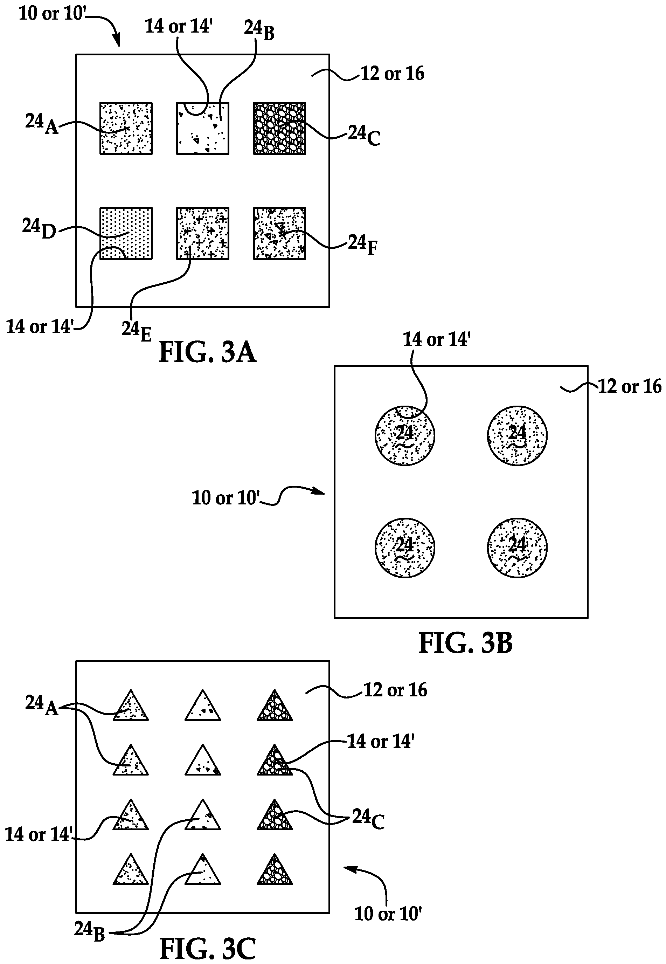

The wells 14, 14' may be formed to have any desirable shape (e.g., as the well 14, 14' appears from the top view) and may have any desirable dimensions (e.g., length, width, diameter, etc.), each of which depends, at least in part, on the type and number of signal amplifying structures 18 to be formed in the well 14, 14', the number of wells 14, 14' to be formed, the size of the substrate 12, and, in some instances, the size of the material 16. Example top-view shapes include square, rectangular (see Fig. 3A), circular (see Fig. 3B), triangular (see Fig. 3C), oval, elliptical, etc. The examples shown in Figs. 1A and 1B have a square shape that continues throughout the depth of the wells 14, 14'. Alternatively, the walls of the wells 14, 14' may be tapered so that the dimensions of the well 14, 14' increases toward the surface S₁₂ or S₁₆ (see Fig. 2F). Techniques for forming the well 14, 14' will be discussed in more detail below.

While one well 14, 14' is shown in each of Figs. 1A and 1B, it is to be understood that any number of wells 14, 14' may be formed in a single substrate 12 or in a single material 16. There is no limit as to the number of wells 14, 14' that may be formed, except as dictated by the size of the substrate 12 used. When multiple wells 14, 14' are formed, each well 14, 14' may be spaced far enough apart from each adjacent well 14, 14' so that the wells 14, 14' are fluidly isolated from one another and so that a sensing technique may be performed within a single well 14, 14' if that is so desirable. As an example, the wells 14, 14' in an array may be at least about 1 µm apart, which, in some instances, is about the limit of a laser spot size.

The molecular sensing devices 10, 10' shown in Figs. 1A and 1B also depict the previously mentioned signal amplifying structure(s) 18 positioned in the wells 14, 14'. The type and number of signal amplifying structures 18 that are used may depend, at least in part, upon the type of sensing to be performed with the molecular sensing device 10, 10'. For example, if the molecular sensing device 10, 10' is to be used for surface enhanced Raman spectroscopy (SERS), the signal amplifying structure(s) 18 may be nano-structures, which have at least one dimension ranging from about 0.1 nm to about 100 nm and have a height that is less than the depth of the well 14, 14' in which the nano-structures are formed. As an example, the well 14, 14' has a depth of about 1 µm, and the signal amplifying structure(s) 18 have a height of about 500 nm.

Examples of nano-structures include antennas, pillars or nano-wires, poles, flexible columnar or finger-like structures, cone-shaped structures, multi-faceted structures, etc. The SERS signal amplifying structure(s) 18 may be metal or metal-coated plasmonic nano-structures that amplify the Raman scattering from a molecule (i.e., analyte, species of interest, predetermined species) when exposed to laser illumination. The metal or metal-coating is a signal-enhancing material, or a material that is capable of enhancing the signal that is generated during a particular sensing process. In an example, the signal-enhancing material is a Raman signal-enhancing material that increases the number of Raman scattered photons when the molecule (or other species of interest) is located proximate to the signal amplifying structure(s) 18, and when the molecule and material are subjected to light/electromagnetic radiation. Raman signal-enhancing materials include, but are not limited to, silver, gold, and copper.

In Figs. 1A and 1B, the Raman signal-enhancing material is labeled 20, and is the material present at the tip of the base portion 22 of the signal amplifying structure(s) 18. When the signal amplifying structure(s) 18 are partially or fully coated with the Raman signal-enhancing material 20, the base portion 22 of the signal amplifying structure(s) 18 may be formed of any other suitable material, such as the substrate 12 material, the material 16, or the like.

The signal amplifying structures 18 may also be configured for use in techniques, such as enhanced fluorescence (e.g., metal-enhanced fluorescence or surface enhanced fluorescence (SEF)) or enhanced chemiluminescence. As an example, for metal-enhanced fluorescence applications, the bases 22 of the signal amplifying structures 18 may be coated with silver nanoparticles. As another example, for enhanced fluorescence applications, the signal amplifying structures 18 may be configured to couple the localized and propagating surface plasmons.

Techniques for forming the signal amplifying structure(s) 18 will be discussed in more detail below.

As previously mentioned, any number of signal amplifying structure(s) 18 may be present in the well 14, 14', depending, at least in part, upon the dimensions of the well 14, 14', the size of the signal amplifying structure(s) 18, and the type of sensing to be performed. As examples, a single signal amplifying structure 18 may be present in a single well 14, 14', or a single well 14, 14' may include a multi-structure assembly, such as a dimer (i.e., 2 structures 18), trimer (i.e., 3 structures 18), tetramer (i.e., 4 structures 18), pentamer (i.e., 5 structures 18), etc.

The molecular sensing devices 10, 10' shown in Figs. 1A and 1B also include an immersion fluid 24 that is introduced into the well 14, 14' so that it surrounds, and in some instances covers, the signal amplifying structure(s) 18 in the well 14, 14'. The immersion fluid 24 may be any suitable liquid or gas that will not deleteriously affect (e.g., degrade, change the morphology of, etc.) the signal amplifying structure(s) 18. The immersion fluid 24 (along with a cover 26) is believed to prevent the signal amplifying structure(s) 18 from absorbing undesirable species from the ambient environment. In other words, the fluid 24 protects the signal amplifying structure(s) 18 from the ambient environment prior to performing the desired sensing technique. When multiple finger-like structures are used as the signal amplifying structures 18 and are included in the same well 14, 14', it is also believed that the immersion fluid prevents the finger-like signal amplifying structures 18 from prematurely and irreversibly collapsing toward one another (e.g., due to external forces, such as micro-capillary forces). The immersion fluid 24 selected will depend, at least in part, on the material(s) used for the signal amplifying structure(s) 18. In an example, the immersion fluid 24 is water, a water-based solution, a non-aqueous liquid(s), or a non-aqueous solution. Examples of the non-aqueous liquid include alcohols (e.g., ethanol), hydrocarbons, nitrogen containing compounds, sulfur containing compounds dissolved in ethanol, or combinations thereof. In another example, the immersion fluid 24 is an inert gas (e.g., neon gas, argon gas, nitrogen-based inert gases, etc.). The immersion fluid 24 may also include a ligand or another anchor species (e.g., DNA, proteins, etc.) that will attach to or otherwise associate with the surface of the signal amplifying structure(s) 18 to enhance the specific binding of chemicals of interest for certain sensing applications. In these instances, the immersion fluid 24 may serve the dual purpose of protection and surface functionalization.

As shown in Figs. 1A and 1B, the molecular sensing devices 10, 10' also include a removable cover 26 that may be attached to the remaining surface S₁₂ (as shown in Fig. 1A) or the remaining surface S₁₆ (as shown in Fig. 1B). Any suitable material that may be removed from the surface S₁₂ or S₁₆ without deleteriously affecting the signal amplifying structure(s) 18 in the well 14, 14' may be used. Examples of removable cover materials include thin polymeric films/membranes that can be peeled off of the surface S₁₂ or S₁₆, or glass, metallic or polymeric layers that can be broken or clipped away from the surface S₁₂ or S₁₆. The removable cover 26 may have any suitable thickness.

When the cover 26 is in a closed position (i.e., adhered or otherwise secured to the substrate 12, or material 16, or material 20 deposited on substrate 12 or material 16 to seal the immersion fluid 24 in the well 14, 14'), the molecular sensing device 10, 10' may be shipped and/or stored until it is desirable to use the device 10, 10' in a sensing application. When it is desirable to perform a sensing application, the removable cover 26 may be removed, for example, by peeling back the cover 26, breaking the cover 26, unclipping the cover 26, or removing the cover 26 by some other suitable method.

The molecular sensing devices 10, 10' shown in Figs. 1A and 1B may be formed via a number of methods. In particular, the well 14, 14' may be formed via any suitable technique, which depends, at least in part, upon the type of substrate 12 or material 16 used, and whether it is desirable to sequentially or simultaneously form the well(s) 14, 14' and signal amplifying structure(s) 18.

In an example method, the signal amplifying structure(s) 18 and well(s) 14, 14' are formed sequentially. In this example method, a two-step masking and etching process may be used. When it is desirable that the well(s) 14 be formed in the substrate 12, this example of the method includes first forming the signal amplifying structure(s) 18 in the substrate 12 and then forming the well(s) 14 in the substrate 12. For example, a mask that provides the desired pattern for the signal amplifying structure(s) 18 may be placed on the substrate 12 and etching may be performed to a desired depth that is less than the thickness of the substrate and less than or equal to the desired depth for the well(s) 14. While the etchant used will depend upon the substrate material that is being used, this step will generally involve an isotropic (wet or dry) etching process. After the signal amplifying structure(s) 18 are formed, the mask will be removed. Another mask that provides the desired pattern for the well(s) 14 while protecting the previously formed signal amplifying structure(s) 18 may be placed on the substrate 12. This etching step may be performed to a desired depth that is less than the thickness of the substrate 12 and less than or equal to the height of the previously formed signal amplifying structure(s) 18.

While the etchant used will again depend upon the substrate material that is being used, this step may involve either an isotropic or anisotropic (wet or dry) etching process. This same sequential process may also be performed in the material 16 so that the well(s) 14' are created in the material 16 and have signal amplifying structure(s) 18 formed therein. It is to be understood that the substrate 12 or material 16 may also have two layers, where the top layer material and thickness is suitable for forming the signal amplifying structure(s) 18 (using the first masking/etching step described above), and the bottom layer material and thickness is suitable for having the well(s) 14, 14' formed therein (using the second masking/etching step described above).

In another example method, the signal amplifying structure(s) 18 and well 14, 14' are formed simultaneously. One example of this method is shown in Figs. 2A through 2F, and illustrates the formation of the molecular sensing device 10'. It is to be understood that this method may also be used to form the molecular sensing device 10 (or 10" shown in Fig. 4).

Fig. 2A illustrates a cross-sectional view of a mold 28 that may be used to form both the signal amplifying structure(s) 18 and the well 14'. The mold 28 may be formed of single crystalline silicon, polymeric materials (acrylics, polycarbonates, polydimethylsiloxane (PDMS), polyimide, etc.), metals (aluminum, copper, stainless steel, nickel, alloys, etc.), quartz, ceramic, sapphire, silicon nitride, or glass.

The mold 28 includes a pattern P for the signal amplifying structure(s) 18 and the well 14'. While the mold shown in Fig. 2A is for forming a single well 14' and the signal amplifying structures 18 therein, it is to be understood that a single mold 28 may be used to create multiple wells 14, 14', each of which has one or more signal amplifying structures 18 therein.

The pattern P is a negative replica of the desired signal amplifying structure(s) 18 and well 14', and thus defines the shapes for at least the base(s) 22 of the signal amplifying structure(s) 18 and for the well 14' that are to be formed. The pattern P may be a negative replica of any of the nano-structures previously mentioned (e.g., antennas, pillars or nano-wires, poles, flexible columnar or finger-like structures, cone-shaped structures, or multi-faceted structures). When more than one signal amplifying structure 18 is desired, the pattern P for the signal amplifying structures 18 may all be the same (e.g., all pillars), may all be different (e.g., one pillar, one pole, one finger-like structure, etc.), or the pattern P for some the signal amplifying structures 18 may be different from one or more others of the signal amplifying structures 18 (e.g., one pillar, two poles, two cones, etc.). Furthermore, when more than one signal amplifying structure 18 is desired, the pattern P for the signal amplifying structures 18 may have the same or different dimensions. Still further, when multiple wells 14, 14' are formed using the same mold 28, the pattern P for the wells 14, 14' may be the same or different for at least one of the wells 14, 14' and the pattern P for the signal amplifying structures 18 may be the same or different for at least one of the wells 14, 14'. As examples, the pattern P may be for forming tall nano-wires and short nano-wires in the same well 14, 14', or for forming wide diameter finger-like structures in one or more wells 14, 14' and narrow diameter finger-like structures in one or more other wells 14, 14'.

The pattern P may be integrally formed in the mold 28. In an example, the pattern P may be formed in the mold 28 via deep reactive ion etching and passivation. More specifically, the Bosch process may be used, and this process involves a series of alternating cycles of etching (e.g., using SF₆ and O₂ plasmas) and passivation (e.g., using a C₄F₈ plasma). The morphology of the resulting pattern may be controlled by controlling the conditions (e.g., vacuum pressure, RF power, total processing time, individual etching cycle time, individual passivation cycle time, and gas flow rates) of the process. In an example, the etcher may be operated at a pressure of 15 mTorr, the coil and platen powers of the etcher are 800 W and 10 W, respectively, each etching cycle (with SF₆ and O₂) is 6 seconds, each passivation cycle (with C₄F₈) is 5 seconds, and the flow rates for SF₆, O₂, and C₄F₈ are 100 sccm, 13 sccm, and 100 sccm, respectively. More generally, the flow rate may be any rate up to about 100 sccm.

The portion of the pattern P that forms the signal amplifying structure(s) 18 may include a regular or non-regular array of the signal amplifying structure shapes. The etching and passivation process previously described often results in a non-regular array. It is to be understood that in order to generate a regular array, a fabrication method, such as focused ion-beam, e-beam lithography, or optical lithography may be used. It is believed that the portion of the pattern P that forms the signal amplifying structure(s) 18 may be designed in a predetermined manner to enable the resulting signal amplifying structure(s) 18 to be sensitive to a targeted range on the Raman spectrum (e.g., capable of producing stronger signals in a particular wavelength).

As shown in Fig. 2B, the mold 28 is pressed into a resist material 16 that had been previously deposited on the substrate 12. Alternatively, the resist material 16 can be deposited on the mold 28, and the substrate 12 can subsequently be adhered to the material 16. The resist material 16 may be an ultraviolet (UV) curable resist material or a thermally curable resist material. The resist material 16 may be deposited on the substrate 12 or mold 28 via any suitable technique, such as spin coating, drop coating, dip-coating, or the like. The thickness of the resist material 16 may be as thick as, or thicker than, the desired depth of the well 14' to be formed therein.

While the mold 28 is pressed into (or otherwise in contact with) the resist material 16, the structure may be exposed to UV light or heat in order to partially or fully cure the resist material 16. Full curing is shown in Fig. 2C. It is to be understood that the time for UV or heat exposure, the power of the UV lamp used, the temperature of the heat, and other like curing parameters will depend, at least in part, on the resist material 16 that is used. In the example shown in the figures, once curing is complete, the mold 28 may be removed (shown in Fig. 2D), and the resulting structure includes the cured resist 16 patterned to form the well 14' and the base(s) 22 of the signal amplifying structure(s) 18. As mentioned above, while the mold 28 is pressed into (or otherwise in contact with) the resist material 16, partial curing may be performed. Partial curing cures some, but not all, of the resist material 16. After partial curing, the mold 28 may be removed. Once the mold 28 is removed, curing may be continued until the resist material 16 is fully cured.

In the example of the method shown in Figs. 2A through 2F, after curing is complete and the mold 28 is removed, the signal-enhancing material 20 is deposited on at least a surface of the base portion 22 of the signal amplifying structure(s) 18. The signal-enhancing material 20 may be established by any suitable deposition or other coating technique. In some examples, a blanket deposition technique may be used so that the material 20 is established on all of the exposed portions of the cured resist 16. In other examples, a selective deposition technique may be used so that the material 20 is established on, for example, the tips of the bases 22 alone. As examples, the material 20 may be deposited via electron-beam (e-beam) evaporation or sputtering. In still other examples, the signal-enhancing material 20 can be pre-formed nanoparticles (e.g., of silver, gold, copper, etc.), which are coated onto the cured resist 16. Such nanoparticles may have an average diameter ranging from about 1 nm to about 10 nm. It is believed that the presence of the material 20 nanoparticles (rather than a continuous coating of material 20) at the apex of the base 22 further enhances the electric field during, e.g., a SERS operation. The material 20 itself may also have a surface roughness that spontaneously forms during the deposition process. This surface roughness can act as additional optical antennas to increases the SERS-active sites over each signal amplifying structure 18.

After the complete signal amplifying structures 18 are formed, the selected immersion fluid 24 is deposited or otherwise introduced into the well 14', as shown in Fig. 2F. The immersion fluid 24 may be deposited/dispensed, e.g., using any dispenser that is capable of depositing/dispensing amounts of the immersion fluid 24 that will surround the signal amplifying structure(s) 18, and in some instances, that will fill the well 14' (or 14). The immersion fluid 24 may be dispensed manually, for example, via tips or pipettes. The immersion fluid 24 may also or alternatively be dispensed automatically, for example, via a jet dispenser (e.g., thermal jet dispensers, piezo jet dispensers, piezo-capillary jet dispensers) or an acoustic dispenser (e.g., Labcyte Echo acoustic dispensers).

When a gas is used, the structure may be placed into a box or container that is filled with the desired gas. The well 14, 14' may be sealed while in the gas-filled box.

The immersion fluid 24 may be sealed within the well 14' (or 14) by removably attaching the removable cover 26 to the outermost surface of the structure or any other surface of the structure that will seal the liquid 24 within the well 14' (or 14'). The removable cover 26 is shown in Fig. 2F. In this particular example, the removable cover 26 is adhered to the signal-enhancing material 20 that is present on the outermost portion of the cured material 16. The method for attaching the cover 26 to the substrate 12, material 16, or material 20 depends, at least in part, on the materials used and the desired method of removal. For example, if a thin polymer film/membrane is used as the removable cover 26 and it is desirable to be able to peel back the film/membrane, an adhesive may be used to removably secure the cover 26 to the molecular sensing device 10, 10'. For another example, if a thicker polymer or glass layer is used as the removable cover 26, the cover 26 may be attached to the structure so that it may subsequently be undipped, using a clipper, from the molecular sensing device 10, 10'. In an example, a clip may be formed by embossing a matching hole and protrusion.

Once the immersion fluid 24 is sealed via the cover 26, the molecular sensing device 10, 10' is ready for shipment and/or storage.

Referring now to Figs. 3A through 3C, different top views of the device 10, 10' are shown with the cover 26 and the signal amplifying structure(s) 18 removed for clarity. These figures illustrate different shapes (when the device 10, 10' is viewed from the top) that may be used for the wells 14, 14', and also illustrate a variety of options for the immersion fluid 24 included in the wells 14, 14'.

Fig. 3A illustrates an example device 10, 10' that has rectangular shaped wells 14, 14', where the rectangular shape extends from the surface S₁₂ or S₁₆ through the depth of the well 14, 14'. The different illustrations in each of the rectangular shaped wells 14, 14' are representative of different immersion fluids 24_{A}, 24_{B}, 24_{C}, 24_{D}, 24_{E}, 24_{F} that have been deposited into each of the rectangular shaped wells 14, 14'. Different immersion fluids 24_{A}, 24_{B}, 24_{C}, 24_{D}, 24_{E}, 24_{F} may be used, for example, when it is desirable to functionalize the signal amplifying structure(s) 18 present in one well 14, 14' differently from the signal amplifying structure(s) 18 present in each of the other wells 14, 14'. For example, if the signal amplifying structure(s) 18 in the respective wells 14, 14' is/are functionalized with different types of DNA, the immersion fluids 24_{A}, 24_{B}, 24_{C}, 24_{D}, 24_{E}, 24_{F} may be different ionic solutions that have different ionic concentrations and/or different pH levels that are suitable for the particular type of DNA in the particular well 14, 14'. During a sensing application using this particular device 10, 10', it may be desirable to expose each well 14, 14' to the same analyte, to expose some wells 14, 14' to a particular analyte while exposing at least one other well 14, 14' to a different analyte, or to expose each of the wells 14, 14' to a different analyte.

Fig. 3B illustrates an example device 10, 10' that has circular shaped wells 14, 14', where the circular shape extends from the surface S₁₂ or S₁₆ through the depth of the well 14, 14'. In this figure, the same illustration in each of the circular shaped wells 14, 14' is representative of the same immersion fluid 24 that has been deposited into each of the circular shaped wells 14, 14'. The same immersion fluid 24 may be used, for example, when it is desirable to functionalize the signal amplifying structure(s) 18 present in each of the wells 14, 14' in the same manner, or when it is desirable to expose the non-functionalized signal amplifying structure(s) 18 to the same analyte (which can be added while the immersion fluid 24 is present in the wells 14, 14'). During a sensing application using this particular device 10, 10', it may be desirable to expose each well 14, 14' to the same analyte, to expose some wells 14, 14' to a particular analyte while exposing at least one other well 14, 14' to a different analyte, or to expose each of the wells 14, 14' to a different analyte.

Fig. 3C illustrates an example device 10, 10' that has triangular shaped wells 14, 14', where the triangular shape extends from the surface S₁₂ or S₁₆ through the depth of the well 14, 14'. The different illustrations in the different columns of the triangular shaped wells 14, 14' are representative of different immersion fluids 24_{A}, 24_{B}, 24_{C} that have been deposited into the respective triangular shaped wells 14, 14' that are aligned in a particular column. Different immersion fluids 24_{A}, 24_{B}, 24_{C} may be used, for example, when it is desirable to functionalize the signal amplifying structure(s) 18 present in the wells 14, 14' of one column differently from the signal amplifying structure(s) 18 present in the wells 14, 14' of the other columns. For example, it may be desirable to functionalize all of the signal amplifying structures 18 in the wells 14, 14' of the first column with DNA, to functionalize all of the signal amplifying structures 18 in the wells 14, 14' of the second column with a protein, and to functionalize all of the signal amplifying structures 18 in the wells 14, 14' of the third column with a ligand. In this example, the immersion fluid 24_{A} is a liquid containing the DNA, the immersion fluid 24_{B} is a liquid containing the protein, and the immersion fluid 24_{C} is a liquid containing the ligand. During a sensing application using this particular device 10, 10', it may be desirable to expose each well 14, 14' to the same analyte, to expose all of the wells 14, 14' in one column to the same analyte but each of the columns to different analytes, or to expose all of the wells 14, 14' within one row to the same analyte but each of the rows to different analytes.

Referring now to Fig. 4, another example of the molecular sensing device 10" is depicted. This device 10" includes barrier walls 30 that further isolate one well 14 from another well 14. The barrier walls 30 may have any desirable height, and could be positioned or formed to completely surround the respective wells 14, 14'. Barrier walls 30 that completely surround a well 14, 14' would enable the immersion fluid 24 to overflow from the well 14, 14' without entering an adjacent well 14, 14'. Barrier walls 30 that completely surround a well 14, 14' would also enable different analyte-containing fluids to be introduced to different wells 14, 14' without having to precisely dispense the different analyte-containing solutions into the particular wells 14, 14'. This is due to the fact that the barrier walls 30 create a contained area that surrounds the well 14, 14', but that is larger than the well 14, 14' itself.

In this example device 10", the barrier walls 30 are attached to the surface S₁₂ of the substrate 12, but it is to be understood that the walls 30 could be integrally formed with the substrate 12. The barrier walls 30 may be made of any desirable material (e.g., transparent polymers, glass, etc.) that will not interfere with the sensing technique to be performed. When the barrier walls 30 are separate from the substrate 12, they may be attached, for example, using an adhesive.

This device 10" is similar to the device 10 shown in Fig. 1A because the wells 14 are formed in the substrate 12. However, the device 10" could be made similar to the device 10' shown in Fig. 1B by forming the wells 14' in the material 16 present on the substrate 12, and then attaching the barrier walls 30 to the material 16. Alternatively, the barrier walls 30 could be integrally formed with the material 16.

In the example device 10" shown in Fig. 4, the signal amplifying structures 18 in the two wells 14 are different. One of the wells 14 (on the left side of the figure) contains four finger-like signal amplifying structures 18 and the other of the wells 14 (on the right side of the figure) contains three cone-shaped signal amplifying structures 18. It is to be understood that a single mold 28 may be used to fabricate such wells 14 and structures 18.

The barrier walls 30 shown in Fig. 4 separate the wells 14 such that two separate covers 26 may be utilized to seal the wells 14. In this example, the removable covers 26 are separately attached to the respective areas of the substrate 12 so that the covers 26 may be individually removed from the substrate 12. In an example, one cover 26 may be removed from one of the wells 14 so that a molecular sensing technique may be performed using the uncovered well 14, while the other of the wells 14 remains covered. In this example, the other of the wells 14 may be subsequently uncovered so that another molecular sensing technique may be performed using that well 14. In another example, each of the covers 26 may be removed so that a molecular sensing technique may be performed using each of the uncovered wells 14 simultaneously. In other examples in which the barrier walls 30 completely surround the respective wells 14, a single cover 26 may be attached to the barrier walls 30 to seal the respective areas (that are defined by the barrier walls 30) around the wells 14.

Referring now to Fig. 5, an example of a molecular sensing system 100 is depicted. The system 100 shown in Fig. 5 is a SERS system that includes a laser source 32, an example of the molecular sensing device 10' (although devices 10 and 10" may also be utilized in the system 100), and a photodetector 34. In this example, the signal amplifying structures 18 are SERS signal amplifying structures, each of which includes a pillar or a finger-like base 22 and a Raman signal-enhancing material 20 deposited at the tip/top of the base 22. Analyte molecules A are introduced into the wells 14'.

The laser source 32 may be a light source that has a narrow spectral line width, and is selected to emit monochromatic light beams L within the visible range or within the near-infrared range. The laser source 32 may be selected from a steady state laser or a pulsed laser. The laser source 32 is positioned to project the light L onto the molecular sensing device 10'. A lens (not shown) and/or other optical equipment (e.g., optical microscope) may be used to direct (e.g., bend) the laser light L in a desired manner. In one example, the laser source 32 is integrated on a chip. The laser source 32 may also be operatively connected to a power supply (not shown).

During operation of the system 100, the cover(s) 26 of the molecular sensing device 10' is/are removed, and the immersion fluid 24 within the well may be removed prior to introduction of an analyte-containing fluid or may remain in the well 14' when the analyte-containing fluid is introduced. Whether or not the immersion fluid 24 is removed depends, at least in part, upon the type of immersion fluid 24 used and whether the immersion fluid 24 will react with the introduced analyte molecules A or will otherwise interfere with the desirable interaction between the analyte molecules A and the signal amplifying structures 18. Removal of the immersion fluid 24 may be accomplished by pouring the liquid 24 out of the well(s) 14', by pipetting or suctioning the liquid 24 out of the well(s) 14', by gas-flowing through the well(s) 14', by evaporating the liquid 24 from the well(s) 14', or by any other suitable technique.

The fluid (i.e., a liquid (e.g., water, ethanol, etc.) or gas (e.g., air, nitrogen, argon, etc.) containing or acting as a carrier for the analyte molecules A is introduced into the well(s) 14'. As mentioned above, different analyte molecules A may be introduced into one or more different wells 14', or the same analyte molecules A may be introduced into each of the wells 14'. The analyte molecules A may settle on a surface of the SERS signal amplifying structures 18 due to gravitational, micro-capillary, and/or chemical forces. In one example, a liquid containing the analyte molecules A is introduced into the well(s) 14' and then the well(s) 14' is/are subsequently dried. Due, at least in part, to micro-capillary forces, adjacent SERS signal amplifying structures 18 pull towards one another and analyte molecules A may become trapped at or near the tips of the SERS signal amplifying structures 18. This is shown in Fig. 5.

The laser source 32 is then operated to emit light L toward the molecular sensing device 10'. It is to be understood that the entire array of wells 14' (and structures 18 therein) may be exposed at the same time, or one or more individual wells 14' may be exposed at a particular time. As such, simultaneously sensing or parallel sensing may be performed. The analyte molecules A concentrated at or near the SERS signal amplifying structures 18 of the molecular sensing device 10' interact with and scatter the light/electromagnetic radiation L (note that the scattered light/electromagnetic radiation is labeled R). The interactions between the analyte molecules A and the SERS signal-enhancing material 20 of the SERS signal amplifying structures 18 cause an increase in the strength of the Raman scattered radiation R. The Raman scattered radiation R is redirected toward the photodetector 34, which may optically filter out any reflected components and/or Rayleigh components and then detect an intensity of the Raman scattered radiation R for each wavelength near the incident wavelength.

The system 100 may include a light filtering element 38 positioned between the molecular sensing device 10' and the photodetector 34. This light filtering element 38 may be used to optically filter out any Rayleigh components, and/or any of the Raman scattered radiation R that is not of a desired region. The system 100 may also include a light dispersion element 40 positioned between the molecular sensing device 10' and the photodetector 34. The light dispersion element 40 may cause the Raman scattered radiation R to be dispersed at different angles. The elements 38 and 40 may be part of the same device or may be separate devices.

A processor 36 may be operatively connected to both the laser source 32 and the photodetector 34 to control both of these components 32, 34. The processor 36 may also receive readings from the photodetector 34 to produce a Raman spectrum readout, the peaks and valleys of which are then utilized for analyzing the analyte molecules A.

It is to be understood that the ranges provided herein include the stated range and any value or sub-range within the stated range. For example, a range from about 0.1 nm to about 100 nm should be interpreted to include not only the explicitly recited limits of about 0.1 nm to about 100 nm, but also to include individual values, such as 0.2 nm, 0.7 nm, 15 nm, etc., and sub-ranges, such as from about 0.5 nm to about 50 nm, from about 20 nm to about 40 nm, etc. Furthermore, when "about" is utilized to describe a value, this is meant to encompass minor variations (up to +/- 10%) from the stated value.

While several examples have been described in detail, it will be apparent to those skilled in the art that the disclosed examples may be modified. Therefore, the foregoing description is to be considered non-limiting.

## Claims

1. A molecular sensing device, comprising:
a substrate (12);
a well i) formed in a material that is positioned on a surface of the substrate or ii) formed in a surface of the substrate;
a plurality of signal amplifying structures (18) positioned in the well, wherein each of the plurality of signal amplifying structures (18) is a finger-like nano-structure which is potentially movable relative to adjacent finger-like nano-structures;
an immersion fluid (24) deposited into the well and surrounding the signal amplifying structures; and
a removable cover which seals the immersion fluid within the well of the device;
wherein the sealed in immersion fluid (24) is such as to prevent the plurality of finger-like signal amplifying nano-structures from irreversibly moving in connection with, or in a direction of, adjacent finger-like signal amplifying nano-structures prior to performing a sensing analysis.

2. The molecular sensing device as defined in claim 1 wherein the fluid (24) includes an inert gas, a liquid, or a liquid and a functional species dissolved in the liquid.

3. The molecular sensing device as defined in claim 1 wherein the device includes:
an array of discrete wells i) formed in the material that is positioned on the surface of the substrate or ii) formed in the surface of the substrate (12); and
respective signal amplifying structures (18) in each of the discrete wells.

4. The molecular sensing device as defined in claim 3 wherein:
the fluid (24) is the same in each of the discrete wells; or
the fluid (24) is different in each of the discrete wells; or
some of the discrete wells have the fluid (24) and some other of the discrete wells have other fluids (24) that are different from the fluid.

5. The molecular sensing device as defined in claim 3, further comprising a barrier wall fluidly separating at least two of the discrete wells in the array.

6. The molecular sensing device as defined in claim 3 wherein the respective signal amplifying structures (18) in at least two of the discrete wells are functionalized to be receptive to a different species.

7. The molecular sensing device as defined in claim 3 wherein the respective signal amplifying structures (18) are the same in each of the discrete wells.

8. The molecular sensing device as defined in claim 1 wherein the finger-like signal amplifying nano-structures (18) are Raman spectroscopy enhancing structures.

9. A method for using the molecular sensing device as defined in claim 1, the method comprising removing the removable cover.

10. A surface enhanced Raman spectroscopy 'SERS' system, comprising: the molecular sensing device as defined in claim 1;
a solution containing a species to be introduced into the well of the molecular sensing device;
a laser source (32) to emit light within a wavelength or a spectrum of wavelengths toward the well of the molecular sensing device; a photodetector (34) to detect light that is scattered after the light from the laser source (32) interacts with the species in the well, and to output a signal in response to detecting the scattered light;
a light filtering element (38) positioned between the molecular sensing device and the photodetector (34); and
a light dispersion element (40) positioned between the molecular sensing device and the photodetector (34).

11. A method for making a molecular sensing device, the method comprising:
forming a well i) in a material that is positioned on a surface of a substrate (12) or ii) in the surface (12) of the substrate;
forming a plurality of signal amplifying structures (18) in the well, wherein each of the plurality of signal amplifying structures (18) is a finger-like nano- structure which is potentially movable relative to adjacent finger-like nano-structures; and
introducing an immersion fluid (24) into the well such that the signal amplifying structures (18) are surrounded by the fluid (24); and
sealing the immersion fluid (12) in the well by attaching a removable cover to the material on the surface of the substrate (12) or to the substrate (12) surface;
wherein the sealed in immersion fluid (24) is such as to prevent the plurality of finger-like signal amplifying nano-structures from irreversibly moving in connection with, or in a direction of, adjacent finger-like signal amplifying nano-structures prior to performing a sensing analysis.

12. The method as defined in claim 11 wherein the forming of the well and the forming of the finger-like signal amplifying nano-structures (18) occur simultaneously, and wherein the forming steps are accomplished by:
pressing a mold into a resist material that is positioned on the substrate, the mold having a pattern to form the well and the finger-like signal amplifying nano-structures within the well;
while the mold is pressed into the resist material, at least partially curing the resist material;
removing the mold; and
depositing a signal-enhancing material (20) on at least a surface of a base (22) of the finger-like signal amplifying nano-structures.

13. The method as defined in claim 11 wherein prior to introducing the fluid (24), the method further comprises selecting the fluid (24) to include a predetermined functional ligand that is selective to a predetermined species.

14. The molecular sensing device as defined in claim 1, or the method as defined in claim 11, wherein the finger-like signal-enhancing nano-structures (20) each have an average diameter from 1 nm to 10 nm.

## Patentansprüche

1. Molekulare Erfassungsvorrichtung, Folgendes umfassend:
ein Substrat (12);
eine Vertiefung, die i) in einem Material ausgebildet ist, das auf einer Oberfläche des Substrats angeordnet ist, oder die ii) in einer Oberfläche des Substrats ausgebildet ist;
mehrere signalverstärkende Strukturen (18), die in der Vertiefung angeordnet sind, wobei jede der mehreren signalverstärkenden Strukturen (18) eine fingerartige Nanostruktur ist, die möglicherweise relativ zu benachbarten fingerartigen Nanostrukturen beweglich ist;
ein Immersionsfluid (24), das in die Vertiefung abgeschieden ist und die signalverstärkenden Strukturen umgibt; und
eine abnehmbare Abdeckung, die das Immersionsfluid in der Vertiefung der Vorrichtung abdichtet;
wobei das eingeschlossene Immersionsfluid (24) derart ist, dass es verhindert, dass sich die mehreren fingerartigen signalverstärkenden Nanostrukturen in Verbindung mit oder in eine Richtung von benachbarten fingerartigen signalverstärkenden Nanostrukturen vor dem Durchführen einer Erfassungsanalyse irreversibel bewegen.

2. Molekulare Erfassungsvorrichtung nach Anspruch 1, wobei das Fluid (24) ein Inertgas, eine Flüssigkeit oder eine Flüssigkeit und eine funktionelle Spezies beinhaltet, die in der Flüssigkeit gelöst ist.

3. Molekulare Erfassungsvorrichtung nach Anspruch 1, wobei die Vorrichtung Folgendes beinhaltet:
eine Anordnung diskreter Vertiefungen, die i) in dem Material ausgebildet sind, das auf der Oberfläche des Substrats angeordnet ist, oder die ii) in der Oberfläche des Substrats (12) ausgebildet sind; und
jeweilige signalverstärkende Strukturen (18) in jeder der diskreten Vertiefungen.

4. Molekulare Erfassungsvorrichtung nach Anspruch 3, wobei:
das Fluid (24) in jeder der einzelnen Vertiefungen gleich ist; oder
das Fluid (24) sich in jeder der einzelnen Vertiefungen unterscheidet; oder
einige der diskreten Vertiefungen das Fluid (24) aufweisen und einige andere der diskreten Vertiefungen andere Fluide (24) aufweisen, die sich von dem Fluid unterscheiden.

5. Molekulare Erfassungsvorrichtung nach Anspruch 3, ferner umfassend eine Barrierewand, die wenigstens zwei der diskreten Vertiefungen in der Anordnung fluidisch trennt.

6. Molekulare Erfassungsvorrichtung nach Anspruch 3, wobei die jeweiligen signalverstärkenden Strukturen (18) in wenigstens zwei der diskreten Vertiefungen funktionalisiert sind, um für eine unterschiedliche Spezies empfänglich zu sein.

7. Molekulare Erfassungsvorrichtung nach Anspruch 3, wobei die jeweiligen signalverstärkenden Strukturen (18) in jeder der diskreten Vertiefungen gleich sind.

8. Molekulare Erfassungsvorrichtung nach Anspruch 1, wobei die fingerartigen signalverstärkenden Nanostrukturen (18) Raman-Spektroskopie-verstärkende Strukturen sind.

9. Verfahren zum Verwenden der molekularen Erfassungsvorrichtung nach Anspruch 1, wobei das Verfahren das Entfernen der abnehmbaren Abdeckung umfasst.

10. Oberflächenverstärktes Raman-Spektroskopie(SERS)system, Folgendes umfassend:
die molekulare Erfassungsvorrichtung nach Anspruch 1;
eine Lösung, die eine Spezies enthält, die in die Vertiefung der molekularen Erfassungsvorrichtung eingeführt werden soll;
eine Laserquelle (32) zum Emittieren von Licht mit einer Wellenlänge oder einem Spektrum von Wellenlängen zu der Vertiefung der molekularen Erfassungsvorrichtung; einen Fotodetektor (34), um Licht zu erfassen, das gestreut wird, nachdem das Licht von der Laserquelle (32) mit der Spezies in der Vertiefung interagiert, und um in Reaktion auf das Erfassen des gestreuten Lichts ein Signal auszugeben;
ein Lichtfilterelement (38), das zwischen der molekularen Erfassungsvorrichtung und dem Fotodetektor (34) angeordnet ist; und
ein Lichtdispersionselement (40), das zwischen der molekularen Erfassungsvorrichtung und dem Fotodetektor (34) angeordnet ist.

11. Verfahren zum Herstellen einer molekularen Erfassungsvorrichtung, wobei das Verfahren Folgendes umfasst:
Ausbilden einer Vertiefung i) in einem Material, das auf einer Oberfläche eines Substrats (12) angeordnet ist, oder ii) in der Oberfläche (12) des Substrats;
Ausbilden mehrerer signalverstärkender Strukturen (18) in der Vertiefung, wobei jede der mehreren signalverstärkenden Strukturen (18) eine fingerartige Nanostruktur ist, die möglicherweise relativ zu benachbarten fingerartigen Nanostrukturen beweglich ist; und
Einführen eines Immersionsfluids (24) in die Vertiefung derart, dass die signalverstärkenden Strukturen (18) von dem Fluid (24) umgeben sind; und
Abdichten des Immersionsfluids (12) in der Vertiefung durch Anbringen einer abnehmbaren Abdeckung an dem Material auf der Oberfläche des Substrats (12) oder an der Oberfläche des Substrats (12);
wobei das eingeschlossene Immersionsfluid (24) derart ist, dass es verhindert, dass sich die mehreren fingerartigen signalverstärkenden Nanostrukturen in Verbindung mit oder in eine Richtung von benachbarten fingerartigen signalverstärkenden Nanostrukturen vor dem Durchführen einer Erfassungsanalyse irreversibel bewegen.

12. Verfahren nach Anspruch 11, wobei das Ausbilden der Vertiefung und das Ausbilden der fingerartigen signalverstärkenden Nanostrukturen (18) gleichzeitig stattfinden und wobei die Ausbildungsschritte durch folgende Schritte erreicht werden:
Pressen einer Form in ein Fotolackmaterial, das auf dem Substrat angeordnet ist, wobei die Form ein Muster aufweist, um die Vertiefung und die fingerartigen signalverstärkenden Nanostrukturen in der Vertiefung auszubilden;
während die Form in das Fotolackmaterial gepresst wird, wenigstens teilweises Aushärten des Fotolackmaterials;
Entfernern der Form; und
Abscheiden eines signalverstärkenden Materials (20) auf wenigstens einer Oberfläche einer Basis (22) der fingerartigen signalverstärkenden Nanostrukturen.

13. Verfahren nach Anspruch 11, wobei das Verfahren vor dem Einführen des Fluids (24) ferner das Auswählen des Fluids (24) umfasst, um einen vorbestimmten funktionellen Liganden zu beinhalten, der für eine vorbestimmte Spezies selektiv ist.

14. Molekulare Erfassungsvorrichtung nach Anspruch 1 oder Verfahren nach Anspruch 11, wobei die fingerartigen signalverstärkenden Nanostrukturen (20) jeweils einen durchschnittlichen Durchmesser von 1 nm bis 10 nm aufweisen.

## Revendications

1. Dispositif de détection moléculaire, comprenant :
un substrat (12) ;
un puits i) formé dans un matériau qui est positionné sur une surface du substrat ou ii) formé dans une surface du substrat ;
une pluralité de structures d'amplification de signal (18) positionnées dans le puits, chacune de la pluralité de structures d'amplification de signal (18) étant une nanostructure en forme de doigt qui est potentiellement mobile par rapport à des nanostructures en forme de doigt adjacentes ;
un fluide d'immersion (24) déposé dans le puits et entourant les structures d'amplification de signal ; et
un couvercle amovible qui scelle le fluide d'immersion à l'intérieur du puits du dispositif ;
le fluide d'immersion scellé (24) étant tel qu'il empêche la pluralité de nanostructures d'amplification de signal en forme de doigt de se déplacer de manière irréversible en connexion avec, ou en direction des nanostructures d'amplification de signal en forme de doigt adjacentes avant d'effectuer une analyse de détection.

2. Dispositif de détection moléculaire selon la revendication 1, dans lequel le fluide (24) inclut un gaz inerte, un liquide ou un liquide et une espèce fonctionnelle dissoute dans le liquide.

3. Dispositif de détection moléculaire selon la revendication 1, le dispositif incluant :
un ensemble de puits discrets i) formés dans le matériau qui est positionné sur la surface du substrat ou ii) formés dans la surface du substrat (12) ; et
des structures d'amplification de signal (18) respectives dans chacun des puits discrets.

4. Dispositif de détection moléculaire selon la revendication 3, dans lequel :
le fluide (24) est le même dans chacun des puits discrets ; ou
le fluide (24) est différent dans chacun des puits discrets ; ou
certains des puits discrets ont le fluide (24) et quelques autres des puits discrets ont d'autres fluides (24) qui sont différents du fluide.

5. Dispositif de détection moléculaire selon la revendication 3, comprenant en outre une paroi barrière séparant de manière fluidique au moins deux des puits discrets dans le réseau.

6. Dispositif de détection moléculaire selon la revendication 3, dans lequel les structures d'amplification de signal (18) respectives dans au moins deux des puits discrets sont fonctionnalisées pour être réceptives à une espèce différente.

7. Dispositif de détection moléculaire selon la revendication 3, dans lequel les structures d'amplification de signal (18) respectives sont les mêmes dans chacun des puits discrets.

8. Dispositif de détection moléculaire selon la revendication 1, dans lequel les nanostructures d'amplification de signal (18) en forme de doigt sont des structures améliorant la spectroscopie Raman.

9. Procédé d'utilisation du dispositif de détection moléculaire selon la revendication 1, le procédé comprenant le retrait du couvercle amovible.

10. Système « SERS » de spectroscopie Raman améliorée en surface, comprenant: le dispositif de détection moléculaire selon la revendication 1 ;
une solution contenant une espèce à introduire dans le puits du dispositif de détection moléculaire ;
une source laser (32) pour émettre de la lumière dans une longueur d'onde ou un spectre de longueurs d'onde en direction du puits du dispositif de détection moléculaire ; un photodétecteur (34) pour détecter la lumière qui est diffusée après que la lumière provenant de la source laser (32) interagisse avec l'espèce dans le puits, et pour émettre un signal en réponse à la détection de la lumière diffusée ;
un élément de filtration de lumière (38) positionné entre le dispositif de détection moléculaire et le photodétecteur (34) ; et
un élément de dispersion de lumière (40) positionné entre le dispositif de détection moléculaire et le photodétecteur (34).

11. Procédé de préparation d'un dispositif de détection moléculaire, le procédé comprenant :
la formation d'un puits i) dans un matériau qui est positionné sur une surface d'un substrat (12) ou ii) dans la surface (12) du substrat ;
la formation d'une pluralité de structures d'amplification de signal (18) dans le puits, chacune de la pluralité de structures d'amplification de signal (18) étant une nanostructure en forme de doigt qui est potentiellement mobile par rapport à des nanostructures en forme de doigt adjacentes ; et
l'introduction d'un fluide d'immersion (24) dans le puits de sorte que les structures d'amplification de signal (18) soient entourées par le fluide (24) ; et
le scellage du fluide d'immersion (12) dans le puits par la fixation d'un couvercle amovible au matériau sur la surface du substrat (12) ou à la surface du substrat (12) ;
le fluide d'immersion scellé (24) étant tel qu'il empêche la pluralité de nanostructures d'amplification de signal en forme de doigt de se déplacer de manière irréversible en connexion avec, ou en direction des nanostructures d'amplification de signal en forme de doigt adjacentes avant d'effectuer une analyse de détection.

12. Procédé selon la revendication 11, dans lequel la formation du puits et la formation des nanostructures d'amplification de signal (18) en forme de doigt se produisent simultanément, et dans lequel les étapes de formation sont accomplies par :
la compression d'un moule dans un matériau de réserve qui est positionné sur le substrat, le moule ayant un motif pour former le puits et les nanostructures d'amplification de signal en forme de doigt à l'intérieur du puits ;
tandis que le moule est pressé dans le matériau de réserve, le durcissement au moins partiel du matériau de réserve ;
le retrait du moule ; et
le dépôt d'un matériau de renforcement de signal (20) sur au moins une surface d'une base (22) des nanostructures d'amplification de signal en forme de doigt.

13. Procédé selon la revendication 11, dans lequel, avant l'introduction du fluide (24), le procédé comprend en outre la sélection du fluide (24) pour inclure un ligand fonctionnel prédéterminé qui est sélectif vis-à-vis d'une espèce prédéterminée.

14. Dispositif de détection moléculaire selon la revendication 1, ou procédé selon la revendication 11, dans lequel les nanostructures de renforcement de signal (20) en forme de doigt ont chacune un diamètre moyen de 1 nm à 10 nm.
